# EUROPÄISCHE PATENTSCHRIFT

(11) **EP 2 504 201 B1**
(45) Veröffentlichungstag und Bekanntmachung des Hinweises auf die Patenterteilung: **28.08.2013**
(21) Anmeldenummer: 10781895.7
(22) Anmeldetag: 22.11.2010
(51) Int. Cl.: B60R 21/0136

(54) **VERFAHREN UND STEUERGERÄT ZUR ERKENNUNG EINER BREITE EINES AUFPRALLBEREICHES IM FRONTBEREICH EINES FAHRZEUGS**
METHOD AND CONTROL UNIT FOR RECOGNISING THE WIDTH OF A CRASHAREA OF A VEHICLES FRONT.
METHODE ET DISPOSITIF POUR RECOGNER UN LARGEUR D'UN AREA DE CRASH A L'AVANT D'UN VEHICULE

(30) Priorität: 24.11.2009 DE 102009047071
(43) Veröffentlichungstag der Anmeldung: 03.10.2012
(73) Patentinhaber: Robert Bosch GmbH, 70442 Stuttgart (DE)
(72) Erfinder: LICH, Thomas, 71409 Schwaikheim (DE); D'ADDETTA, Gian Antonio, 70176 Stuttgart (DE)
(86) Internationale Anmeldenummer: PCT/EP2010/067903
(87) Internationale Veröffentlichungsnummer: WO 2011/064165

(56) Entgegenhaltungen:
- EP-A1- 1 844 989
- EP-A2- 1 306 269
- EP-A2- 1 350 682
- DE-A1- 10 146 399
- DE-A1-102004 036 833
- US-B1- 6 286 895

## Beschreibung

### Stand der Technik

Die vorliegende Erfindung bezieht sich auf ein Verfahren gemäß Anspruch 1, ein Steuergerät gemäß Anspruch 10, sowie ein Computerprogrammprodukt gemäß Anspruch 11.

Seit der Einführung der Fahrgastzelle in Kraftfahrzeugen hat sich die Fahrzeugsicherheit deutlich weiterentwickelt. Durch den Einsatz von Komponenten der aktiven und passiven Sicherheit konnte die Anzahl der Getöteten im Straßenverkehr deutlich reduziert werden. Bei einem Großteil der Unfälle handelt es sich um Fahrzeug-Fahrzeug-Frontkollisionen mit schwerem Verletzungsgrad bis hin zur Todesfolge. Durch die Einführung von Verbraucherschutztests sowie Gesetzesanforderungen hinsichtlich Frontalkollisionen mit 100%- bzw. 40%-Überdeckung konnte bisher eine wesentliche Verbesserung hinsichtlich der Unfallfolgenminderung geleistet werden. Dadurch rücken jedoch neuerdings andere Kollisionsarten und Themen in den Vordergrund. Eines dieser neueren Themen kann im verstärkten Partnerschutz und einer besseren Crashkompatibilität gesehen werden.

Grundsätzlich steht innerhalb des Entwicklungsprozesses der passiven Sicherheit eines Fahrzeugs der Selbstschutz im Vordergrund. Dies ist die Eigenschaft des Fahrzeugs seine eigenen Insassen sowohl in Fahrzeug-Fahrzeug-Kollisionen als auch in Kollisionen mit anderen Objekten zu schützen. Demgegenüber steht der Partnerschutz - dies ist die Eigenschaft des Fahrzeugs die Insassen des gegnerischen Fahrzeugs in einer Fahrzeug-Fahrzeug-Kollision zu schützen, also eine möglichst geringe Aggressivität zu haben. Beide Eigenschaften werden in der Crashkompatibilität vereinigt. Diese Kombination bezeichnet ein hohes Maß an Selbstschutz bei niedriger Aggressivität gegenüber anderen Verkehrsteilnehmern in der Weise, dass das Gesamtrisiko in der Fahrzeugflotte minimiert wird. Es besteht allgemeine Einigkeit, dass eine Verbesserung der Kompatibilität nicht zu Lasten des Selbstschutzes einzelner Fahrzeuge gehen darf.

Anhand von Unfalldaten kann gezeigt werden, dass zwar die heute existierenden Crashtests den Selbstschutz stark verbessert haben, allerdings bei einer gleichzeitigen Abnahme des Partnerschutzes. Im Zuge dessen kann es zukünftig zu neuen Verbraucherschutztests für den Frontlastfall kommen, um die Kompatibilitätseigenschaften der Fahrzeuge besser bewerten zu können. Um in der Praxis eine höhere Kompatibilität des Fahrzeugs zu erhalten kann zukünftig in die Fahrzeugfront- und Fahrzeugheckstruktur eingegriffen werden. Hierzu gibt es bereits Ansätze die als Stand der Technik angesehen werden können.

Die DE 101 46 399 A zeigt ein Verfahren zur Erkennung einer Breite eines Aufprallbereiches eines Objektes im Frontbereich eines Fahrzeugs, wobei das Verfahren die folgenden Schritte aufweise:
- Empfangen eines ersten Deformationselementsignals, das eine Veränderung eines Abstands von Komponenten eines im linken Frontbereich des Fahrzeugs verbauten ersten Deformationselements zueinander repräsentiert;
- Erhalten eines zweiten Deformationselementsignals, das eine Veränderung eines Abstands von Komponenten eines im rechten Frontbereich des Fahrzeugs verbauten zweiten Deformationselements zueinander repräsentiert;
- Erkennen einer Offset-Kollision (Offset or no Offset).

Die DE 10 2004 036 836 A1 zeigt ein Deformationselement für Fahrzeuge mit einer ersten Kraftabsorptionseinheit, mindestens einer zweiten Kraftabsorptionseinheit, die eine einwirkende Kraft absorbieren kann, die oberhalb eines vorgegebenen Kraftwertes liegt, und einem Sensor zur Detektion einer auf das Deformationselement einwirkenden Kraft. Damit weist das Deformationselement ein Absorptionsverhalten auf, dass an das Kollisionsobjekt, insbesondere einen Fußgänger, angepasst ist und das Verletzungsrisiko für Fußgänger senkt.

### Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Erkennung einer Breite eines Aufprallbereiches eines Objektes im Frontbereich eines Fahrzeugs, wobei das Verfahren die folgenden Schritte aufweist:
- Empfangen eines ersten Deformationselementsignals, das eine Veränderung eines Abstands von Komponenten eines im linken Frontbereich des Fahrzeugs verbauten ersten Deformationselements zueinander repräsentiert;
- Erhalten eines zweiten Deformationselementsignals, das eine Veränderung eines Abstands von Komponenten eines im rechten Frontbereich des Fahrzeugs verbauten zweiten Deformationselements zueinander repräsentiert;
- Erkennen einer Offset-Kollision mit einer geringen Breite eines Aufprallbereiches des Objektes auf das Fahrzeug, wenn sich das erste Deformationselementsignal um mehr als einen vordefinierten Schwellwertpegel von dem zweiten Deformationselementsignal unterscheidet.

Unter einem Deformationselement wird dabei ein Energieabsorptionselement verstanden, das sich beispielsweise beim Aufprall eines Objektes auf das Fahrzeug irreversibel oder reversibel verformt. Durch die Verformung wird Energie aufgenommen, und auf diese Weise der Aufprall des Objektes auf das Fahrzeug (oder andersherum des Fahrzeugs auf das Objekt) abgedämpft. Das Deformationselement kann beispielsweise aus einer Blech-Faltkonstruktion bestehen, die sich bei einem Aufprall eines Fremdfahrzeugs oder eines Baums als Objekt verbiegt und dabei einen gewissen Teil der Aufprallenergie aufnimmt. Ebenfalls adressiert die Erfindung auch reversible oder adaptiv schaltbare Deformationselemente. Diese befinden sich bereits in der Forschung bieten den Vorteil der bereits eingebauten Sensorik zu Ansteuerung der Deformationselemente gemäß der klassifizierten Situation. Hierdurch können die Verletzungen, die bei einem Unfall möglicherweise für einen Fahrzeuginsassen oder einen Fußgänger auftreten, minimiert werden. Unter einer Offset-Kollision wird dabei eine Kollision zwischen dem Objekt und dem Fahrzeug verstanden, bei der der Auftreffbereich des Objektes auf das Fahrzeug sich nicht vollständig über die gesamte Fahrzeug-Fronseite erstreckt. Vielmehr wird bei einer solchen Offset-Kollision lediglich ein Teilbereich der Fahrzeugfront durch das entgegenkommende Objekt getroffen.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die vorliegende Erfindung basiert auf der Erkenntnis, dass nun bereits vorhandene Deformationselemente und Sensoreinheiten an diesen Deformationselementen sehr einfach für einen zusätzlichen Nutzen weiterverwendet werden können. Dabei wird ein Signal von einem Sensor an einem Deformationselement auf einer in Fahrtrichtung rechten Fahrzeugseite mit einem Signal verknüpft, dass von einem Sensor an einem Deformationselement auf einer in Fahrtrichtung linken Fahrzeugseite bereitgestellt wurde. Das Signal von dem ersten Deformationselement auf der rechten Fahrzeugseite kann dabei beispielsweise eine Abstandsänderung von zwei Komponenten dieses ersten Deformationselements repräsentieren oder auch eine Geschwindigkeit mit der sich diese beiden Komponenten des ersten Deformationselements aufeinander zu bewegen oder weitere daraus abgeleitete Größen wie die Beschleunigung. Analog kann das Signal von dem zweiten Deformationselement auf der linken Fahrzeugseite beispielsweise ebenfalls eine Abstandsänderung von zwei Komponenten dieses zweiten Deformationselements repräsentieren oder auch eine Geschwindigkeit repräsentieren, mit der sich diese beiden Komponenten des zweiten Deformationselements aufeinander zu bewegen oder weitere daraus abgeleitete Größen wie die Beschleunigung. Trifft nun ein Objekt wie beispielsweise ein entgegenkommendes Fahrzeug nur in einem kleinen Überlappungsbereich der Frontseite auf das eigene Fahrzeug, so wird eine ungleichmäßige Beanspruchung der beiden Deformationselemente erfolgen. Dasjenige Deformationselement, das sich auf der Fahrzeugseite des Fahrzeugs befindet, die stark von dem Aufprall des entgegenkommenden Objektes betroffen ist, wird sich deutlich stärker verformen als das Deformationselement, das sich auf der Fahrzeugseite des Fahrzeug befindet, die von dem Aufprall des entgegenkommenden Objektes weniger oder gar nicht betroffen ist. Aus diesem Grund lässt sich eine Bestimmung einer Offset-Kollision mit einer geringen (Höchst-) Breite eines Aufprallbereichs eines Objektes auf einen Frontbereich des Fahrzeugs durch eine Auswertung der entsprechenden Signale vom ersten und zweiten Deformationselement sehr einfach erzielen. Dies kann beispielsweise dadurch erfolgen, dass erkannt wird, dass sich ein Wert des ersten Deformationselementsignals um mehr als ein vordefinierter Schwellwert von einem Wert des zweiten Deformationselementsignals unterscheidet. Auch kann das erste Deformationselementsignal mit dem zweiten Deformationselementsignal, beispielsweise durch eine Differenzbildung, verknüpft werden, um ein Verknüpfungssignal zu erhalten und nachfolgend einen absoluten Wert des Verknüpfungssignals auf ein Über- oder Unterschreiten eines Schwellwertes hin zu überprüfen.

Durch einen Vergleich der beiden Deformationselementsignale oder eine Verknüpfung dieser beiden Signale und einen nachfolgenden Vergleich des Verknüpfungsergebnisses mit einem Schwellwert kann dann nämlich erkannt werden, dass eine Verformung eines der beiden Deformationselemente wesentlich größer ist als eine Verformung des anderen der beiden Deformationselemente. Hieraus kann geschlossen werden, dass das entgegenkommende Objekt nicht über die volle Frontbreite auf das eigene Fahrzeug erstaufgeprallt ist und in die Fahrzeugstruktur eindringt, sondern nur in einem Teilbereich der eigenen Fahrzeugfront erstaufgeprallt ist, nämlich demjenigen Teilbereich der Fahrzeugfront, in dem das Deformationselement mit der größeren erlittenen Verformung angeordnet ist. Durch die Wahl eines geeigneten Vergleichsschwellwertes kann dann unter Rückgriff auf Erfahrungswerte in einem Labor erkannt werden, wie groß die Überdeckung der Aufprallflächen zwischen der Fahrzeugfront des eigenen Fahrzeugs und der Front des entgegenkommenden Fahrzeugs ist. Wird die Überdeckung der Aufprallbereiche des entgegenkommenden Objektes und der Fahrzeugfront größer, nähern sich die erlittenen Verformungen der beiden Deformationselemente an, so dass auf ähnliche oder fast gleiche Signalwerte bezüglich einer Abstandsänderung von Komponenten der beiden Deformationselemente zu erwarten sind. In diesem Fall wird eine Verknüpfung des ersten Deformationselementsignals mit dem zweiten Deformationselementsignal dann kein Verknüpfungssignal mehr ergeben, das einen absoluten Wert hat, der über dem vorbestimmten Schwellwert liegt.

Die vorliegende Erfindung bietet den Vorteil, dass nun Signale von bereits verfügbaren und verbauten Komponenten in einfacher Weise ausgenutzt werden können, um einen zusätzlichen Nutzen für die Fahrzeugsicherheit zu ermöglichen. Wird beispielsweise erkannt, dass ein auf das Fahrzeug aufprallendes Objekt lediglich in einem kleineren Überlappungsbereich auf die Fahrzeugfront auftrifft, so ist davon auszugehen, dass sich das Fahrzeug nach der Kollision drehen wird. In diesem Fall wären andere Insassenschutzmittel zu aktivieren, als dies bei einem Frontalaufprall mit einem sehr großen Überlappungsbereich zwischen dem entgegenkommen Objekt und der Fahrzeugfront des Fahrzeugs erforderlich wäre.

In einer günstigen Ausführungsform der Erfindung ist ferner ein Schritt des Verknüpfens des ersten Deformationselementsignals mit dem zweiten Deformationselementsignal vorgesehen, um ein Verknüpfungssignal zu erhalten, wobei im Schritt des Erkennens eine geringe Breite als Höchstbreite eines Aufprallbereiches des Objektes auf das Fahrzeug erkannt wird, wenn ein absoluter Signalpegelwert des Verknüpfungssignals einen Wert aufweist, der über einem vorbestimmten Schwellwert liegt. Eine derartige Ausführungsform der vorliegenden Erfindung bietet den Vorteil einer technisch sehr einfach umsetzbaren Auswertungsmöglichkeit für das erste und zweite Deformationselementsignal, wobei ein Vergleich mit unterschiedlichen Schwellwertpegeln möglich ist, die unterschiedliche Überlappungsbereiche repräsentieren.

In einer günstigen Ausführungsform der Erfindung wird im Schritt des Verknüpfens eine Bildung einer Differenz, einer Addition, einer Multiplikation und/oder einer Division zwischen Werten des ersten und zweiten Deformationselementsignals ausgeführt. Derartige Ausführungsformen der vorliegenden Erfindung besitzen den Vorteil einer technisch sehr einfach und schnell umsetzbaren Möglichkeit zur Bestimmung des Verknüpfungssignals. Es kann somit auf das Vorsehen von zusätzlichen Recheneinheiten oder einer größeren und leistungsfähigeren Recheneinheit zur Umsetzung der vorliegenden Erfindung verzichtet werden. Dem Fachmann ist klar, dass auch bereits vorverarbeitete Werte des ersten und zweiten Deformationselementsignals, wie sie üblicherweise und beispielhaft auch bei Filterstufen durchgeführt werden, für eine Auswertung verwendet werden können.

Auch kann im Schritt des Erkennens eine mittlere Breite eines Aufprallbereiches des Objektes auf das Fahrzeug erkannt werden, wenn ein absoluter Wert des Verknüpfungssignals einen Wert aufweist, der unter dem vorbestimmten Schwellwert jedoch über einem vorbestimmten zweiten Schwellwert liegt. Eine derartige Ausführungsform der vorliegenden Erfindung bietet die Möglichkeit durch die Verwendung von unterschiedlich abgestuften Schwellwerten unterschiedliche Grade von Überdeckungen zwischen einer Breite des entgegenkommenden Objektes und einer Frontbreite des eigenen Fahrzeugs festzustellen.

Günstig ist es auch, wenn im Schritt des Erkennens eine große Breite eines Aufprallbereiches des Objektes auf das Fahrzeug erkannt wird, wenn das Verknüpfungssignal einen Signalpegelwert aufweist, der innerhalb eines Toleranzbereiches um einen Wert von Null liegt. Eine derartige Ausführungsform der vorliegenden Erfindung bietet den Vorteil, dass auch ein Frontalaufprall eines Objektes auf das Fahrzeug erkennbar wird, wobei das Objekt nahezu über die gesamte Fahrzeugbreite auf das eigene Fahrzeug aufprallt. In diesem Fall ist es möglich, eine unterschiedliche Ansteuerung von verschiedenen Personenschutzmitteln für Insassen des Fahrzeugs vorzunehmen, je nachdem welche Überlappungsbreite des Aufprallobjektes mit der Fahrzeugfront erkannt wurde. Der zu berücksichtigende Toleranzbereich kann dabei ca. 15 % des Wertebereiches aufweisen, der in einer Auswerteeinheit für die Auswertung des ersten oder zweiten Deformationselementsignals zur Verfügung steht.

Ferner kann im Schritt des Erkennens auch ein Heckaufprall eines Objektes auf das Fahrzeug erkannt werden, wenn ein weiteres Signal, das eine positive Beschleunigung in eine Fahrtrichtung des Fahrzeugs repräsentiert, zusammen mit einem Verknüpfungssignal erhalten wird, dessen Signalpegelwert innerhalb eines Toleranzbereiches um den Wert Null liegt. Eine derartige Ausführungsform der vorliegenden Erfindung bietet den Vorteil, dass die Erfindung weiterhin zur Plausibilisierung eines Heckaufpralls verwendet werden kann. Bei einem Heckaufprall eines Objekts auf das Fahrzeug wird nämlich keine Deformation des Frontbereichs detektiert, so dass auch keine Verformung des ersten und/oder zweiten Deformationselements zu erwarten ist. Dennoch wird durch den Stoß von hinten eine detektierbare Beschleunigung auf das Fahrzeug ausgeübt, so dass die Kombination dieser positiven Beschleunigung (beispielsweise in Form einer UND-Verknüpfung) mit einem Signalpegelwert des Verknüpfungssignals, der innerhalb eines Toleranzbereichs einem Wert von Null entspricht, einen Rückschluss auf eine solche aufgetretene Heckkollision zulässt. Der zu berücksichtigende Toleranzbereich kann dabei ca. 15 % des Wertebereiches aufweisen, der in einer Auswerteeinheit für die Auswertung des ersten oder zweiten Deformationselementsignals zur Verfügung steht. Darüber hinaus kann in einer weiteren ergänzenden oder alternativen Ausführung eine zweite Toleranz berücksichtigt werden. Hierbei handelt es sich um eine zeitliche Größe die berücksichtigt wird. Diese lässt sich beispielsweise über eine Zähleinheit realisieren, die in einer weiteren Verknüpfungsstufe (beispielsweise in Form einer UND-Verknüpfung) verglichen wird. Diese kann notwendig werden, da es beispielsweise in Stau-Situationen zu weiteren Auffahrunfällen kommen kann. In diesen erfolgen zunächst eine Primärkollision im Heckbereich und eine weitere Sekundärkollision an der Front. Aufgrund des Abstands zum Vordermann ist jedoch eine zeitliche Limitierung zu berücksichtigen, die im Bereich kleiner 0,5 s liegt, bevor es zum Anprall kommt.

Um eine weitere Erhöhung der Personensicherheit für Fahrzeuginsassen zu erreichen, kann das Verfahren ferner, ansprechend auf ein ausgewertetes Verknüpfungssignal, einen Schritt des Ausgebens eines Ansteuersignals für eine Fahrzeuginsassenschutzeinheit des Fahrzeugs aufweisen.

Gemäß einer weiteren Ausführungsform der Erfindung wird im Schritt des Erkennens ferner ein vorbestimmter Schweregrad eines Aufpralls des Objektes auf das Fahrzeug erkannt, wenn sich eine Signalamplitude des ersten und/oder zweiten Deformationselementsignals innerhalb einer vordefinierten Auswertungszeit um mehr als eine vorbestimmte Amplitudendifferenz ändert. Eine derartige Ausführungsform der vorliegenden Erfindung bietet den Vorteil einer zusätzlichen Auswertung eines empfangenen ersten Deformationselementsignals oder eines erhaltenen zweiten Deformationselementsignals. Hierbei kann das bereits empfangene Signal nach zusätzlichen Auswertungskriterien ausgewertet werden, so dass durch eine technisch einfach zu realisierende weitere Signalverarbeitung ein zusätzlicher Nutzen aus bereits verfügbaren Signalen gezogen werden kann.

Gemäß einer zusätzlichen Ausführungsform der Erfindung kann im Schritt des Erkennens ferner eine Eindringtiefe des Objektes in das Fahrzeug erkannt werden, ansprechend auf eine Signalamplitude des ersten und/oder zweiten Deformationselementsignals. Eine derartige Ausführungsform von der vorliegenden Erfindung bietet ebenfalls den Vorteil einer zusätzlichen Auswertung eines bereits verfügbaren ersten und/oder zweiten Deformationselementsignals, so dass aus diesem Signal durch eine technisch einfach zu realisierende weitere Signalverarbeitung unter Verwendung eines zusätzlichen Auswertungskriteriums ein zusätzlicher Nutzen gezogen werden kann.

In einer weiteren Ausführungsform der vorliegenden Erfindung kann im Schritt des Erkennens ein Aufprall des Objektes im Bereich des linken Frontbereichs des Fahrzeugs erkannt werden, wenn aus dem ersten und zweiten Deformationselementsignal eine größere Verformung des ersten Deformationselements gegenüber dem zweiten Deformationselement zu erkennen ist und/oder dass im Schritt des Erkennen ein Aufprall des Objektes im Bereich des rechten Frontbereiches des Fahrzeugs erkannt wird, wenn aus dem ersten und zweiten Deformationselementsignal eine größere Verformung des zweiten Deformationselements gegenüber dem ersten Deformationselement zu erkennen ist. Eine derartige Ausführungsform der vorliegenden Erfindung bietet den Vorteil, dass eine Erkennung einer Seite des Aufpralls des Objektes auf das Fahrzeug im Frontbereich erkannt wird, die voraussichtlich eine Drehung des Fahrzeugs zur Folge haben wird. Hierdurch wird es möglich, je nach der zu erwartenden Fahrzeugdrehung nach dem Aufprall entsprechend unterschiedliche Personensicherheitsmittel frühzeitig aktivieren zu können. Eine größere Verformung eines der beiden Deformationselemente gegenüber dem anderen Deformationselement ist dabei beispielsweise aus einer größeren Änderung eines Abstands von zwei Komponenten des stärker verformten Deformationselements gegenüber einer Änderung eines Abstands von zwei Komponenten des schwächer verformten Deformationselements zu erkennen.

Die Erfindung wird anhand der beigefügten Zeichnungen beispielhaft näher erläutert. Es zeigen:
- Fig. 1: ein Blockschaltbild eines ersten Ausführungsbeispiels der vorliegenden Erfindung;
- Fig. 2: eine Darstellung eines Ausführungsbeispiels eines Einbaus von Deformationselementen in einem Frontbereich des Fahrzeugs;
- Fig. 3a-b: eine Darstellung eines crashadaptiven Tragelementes mit Abstandsmessung von Komponenten des Deformationselementes;
- Fig. 4: eine schematische Darstellung einer Offset-Kollision mit einem zugehörigen Diagramm, in dem die Signale der Sensoren aus dem ersten und zweiten Deformationselement dargestellt sind;
- Fig. 5: eine schematische Darstellung einer Full-Frontal-Kollision mit einem zugehörigen Diagramm, in dem die Signale der Sensoren aus dem ersten und zweiten Deformationselement dargestellt sind;
- Fig. 6: ein Blockschaltbild eines ersten einfachen Algorithmus zur OffsetKollisionsdetektion;
- Fig. 7: eine schematische Darstellung einer Heck-Kollision mit einem zugehörigen Diagramm, in dem die Signale der Sensoren aus dem ersten und zweiten Deformationselement dargestellt sind;
- Fig. 8: ein Blockschaltbild eines einfache Algorithmus zur Erkennung einer Heckkollision; und
- Fig. 9: ein Ablaufdiagramm eines Ausführungsbeispiels der vorliegenden Erfindung als Verfahren.

Gleiche oder ähnliche Elemente können in den Figuren durch gleiche oder ähnliche Bezugszeichen versehen sein, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal/Schritt und einem zweites Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist

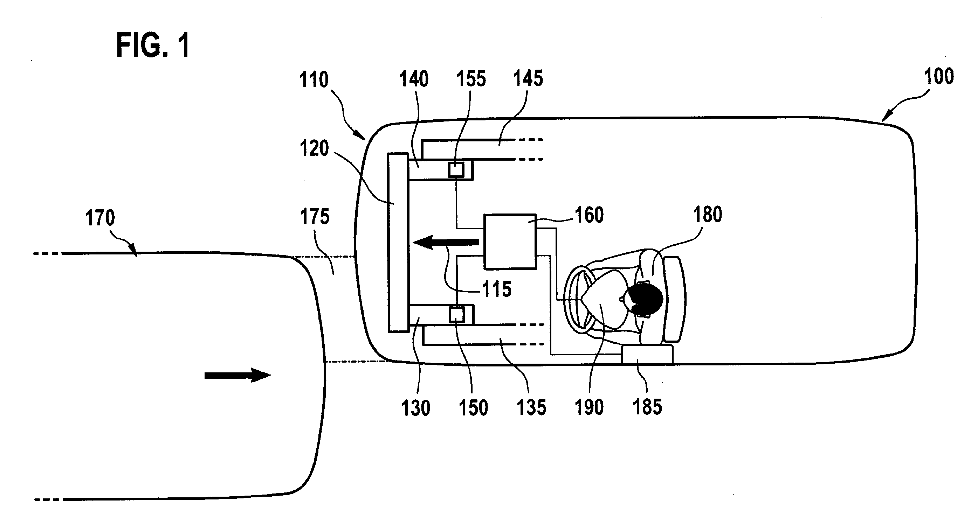

Fig.1 zeigt ein Blockschaltbild eines ersten Ausführungsbeispiels der vorliegenden Erfindung. Dabei ist in Fig.1 ein Fahrzeug 100 dargestellt, das im Frontbereich 110, in Fahrtrichtung 115 gesehen, einen Querträger 120 aufweist. Der Querträger 120 ist über ein erstes Deformationselement 130 mit einem linken Längsträger 135 des Fahrzeugs 100 verbunden. Weiterhin ist der Querträger 120 über ein zweites Deformationselement 140 mit einem rechten Längsträger 145 des Fahrzeugs verbunden. Der erste Deformationselement 130 umfasst dabei einen Sensor oder ein Sensorsystem 150, der /das zur Messung eines Abstands oder einer Abstandsänderung zwischen zumindest zwei Komponenten des ersten Deformationselements 130 ausgebildet ist. Der zweite Deformationselement 140 umfasst ebenfalls einen Sensor 155, der zur Messung eines Abstands oder einer Abstandsänderung von zumindest zwei Komponenten des zweiten Deformationselements aus 140 ausgebildet ist. Dabei kann der erste Sensor/Sensorsystem 150 ein entsprechendes erstes Sensor- oder Deformationselementsignal zu einer Auswerteeinheit 160 und der zweite Sensor/Sensorsystem 155 ein entsprechendes zweites Sensor- oder Deformationselementsignal zu der Auswerteeinheit 160 übertragen.

Erfolgt nun ein Aufprall eines Objektes, wie beispielsweise des in Fig.1 dargestellten Fahrzeugs 170 auf den Frontbereich 110 des Fahrzeugs 100, wird eine Deformation des Fahrzeugs 100 erfolgen, die ein Eindrücken des Querträgers 120 in Richtung des Fahrzeuginneren bewirkt. Da jedoch das entgegenkommende Fahrzeug 170 in einem Überlappungsbereich 175 auf den Frontbereich 110 des Fahrzeugs 100 trifft, wird auch beim Aufprall ein unterschiedliches Deformationsverhalten der Komponenten des Fahrzeugs 100 resultieren. In diesem Fall wird eine Offset-Kollision erkannt, die auch als Achsversatz-Kollision bezeichnet werden kann. Dabei wird insbesondere das erste Deformationselement 130 an der linken Fahrzeugseite stärker verformt, als das zweite Deformationselement 140 auf der rechten Fahrzeugseite. Dies hat zur Folge, dass der erste Sensor 150 eine größere Änderung eines Abstands von Komponenten des ersten Deformationselements 130 registrieren wird, als eine Änderung eines Abstands von Komponenten des zweiten Deformationselements 140 durch den zweiten Sensor 155 registriert werden wird. In die Auswerteeinheit 160 kann daher, ausgehend von dem ersten Deformationselementsignal des ersten Sensors 150 und dem zweiten Deformationselementsignals des zweiten Sensors 155, eine solche unterschiedliche Abstandsänderung von Komponenten des ersten Deformationselements 130 gegenüber einer Abstandsänderung vom Komponenten des zweiten Deformationselements 140 erfasst werden. Dies kann beispielsweise durch die Bildung einer Differenz zwischen einem Wert des ersten Deformationselementsignals und einem Wert des zweiten Deformationselementsignals erfolgen, wobei diese Differenz dann mit einem vordefinierten Schwellwert verglichen wird. Wird dabei festgestellt, dass die Differenz (genauer gesagt ein absoluter Wert der Differenz) größer als der vordefinierte Schwellwert ist, das heißt dass eine Änderung eines Abstands von Komponenten des ersten Deformationselements 130 größer ist, als eine Änderung eines Abstands von Komponenten des zweiten Deformationselements 140, kann durch die Auswerteeinheit 160 geschlossen werden, dass das entgegenkommende Fahrzeug 170 lediglich in einem Überlappungsbereich 175 auf die das Fahrzeug 100 auftrifft, der kleiner als die gesamte Breite des Fahrzeugfrontbereichs 110 ist.

Es können dabei auch mehrerer Schwellwerte verwendet werden, die jeweils unterschiedlich große Überlappungsbereiche 175 in Bezug auf eine gesamte Fahrzeugfrontbreite 110 repräsentieren. Trifft dagegen das entgegenkommende Fahrzeug 170 auf der gesamten Breite des Frontbereiches 110 des Fahrzeugs 100 auf, wäre ein in etwa gleiches Deformationsverhalten des ersten Deformationselements 130 und des zweiten Deformationselements 140 zu erwarten. Dabei wird davon ausgegangen, dass das erste Deformationselement 130 und das zweite Deformationselement 140 ein gleiches Deformationsverhalten haben.

Wird nun in der Auswerteeinheit 160 ein Aufprall des Objekts 170 im linken Teil des Frontbereichs 110 erkannt, kann beispielsweise daraus geschlossen werden, dass unmittelbar danach eine Drehung des Fahrzeugs 100 erfolgen wird. Für einen solchen Fall kann nun die Auswerteeinheit 160 ein Personensicherheitsmittel für einen Insassen 180 des Fahrzeugs aktivieren, zum Beispiel eines das speziell einen Personenschutz bei solchen seitlichen Drehungen bewirkt. Beispielsweise kann durch die Auswerteeinheit 160 ein Seitenairbag 185 aktiviert werden, um den Insassen 180 in einer vorbestimmten Position auf einem Fahrzeugsitz zu halten. Wird dagegen in der Auswerteeinheit 160 ein Überlappungsbereich 175 erkannt, der im Wesentlichen der gesamten Fahrzeugfront 110 entspricht, so ist von einem Frontalaufprall des Objekts 170 mit hoher Überlappungsdeckung auszugehen, so dass keine oder nur eine geringe Fahrzeugdrehung zu erwarten ist. In diesem Fall könnte durch die Auswerteeinheit 160 ein Frontairbag 190 aktiviert werden, der eine größtmögliche Schutzwirkung bei einem Frontalaufprall ohne Seitendrehung des Fahrzeugs 100 entfaltet.

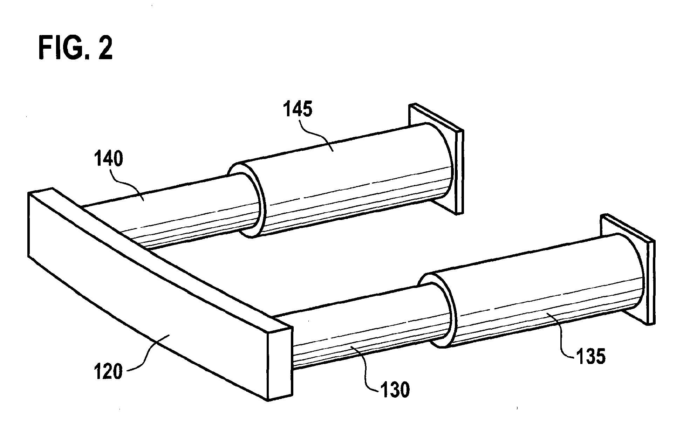

Um die Erfindung bestmöglich einsetzen zu können, wird dabei auf eine adaptive Frontstruktur zurückgegriffen, wie sie in den Fig. 2 dargestellt ist. Die Fig. 2 zeigt eine schematische Ansicht, bei der die Deformationselemente 130 bzw. 140 als adaptive Crashelemente ausgebildet sind, die zwischen den Längsträgern 135 bzw. 145 (die in diesem Fall karosseriefest ausgebildet sind) und einem Querträger 120 angeordnet sind. Beide adaptiven Crashelemente 130 und 140 können in ihrer Steifigkeit und ihrem Deformationsverhalten adaptiert werden und sind durch einen breiten Querträger gekoppelt und z.B. zusätzlich mit einem Schaumelement versehen.

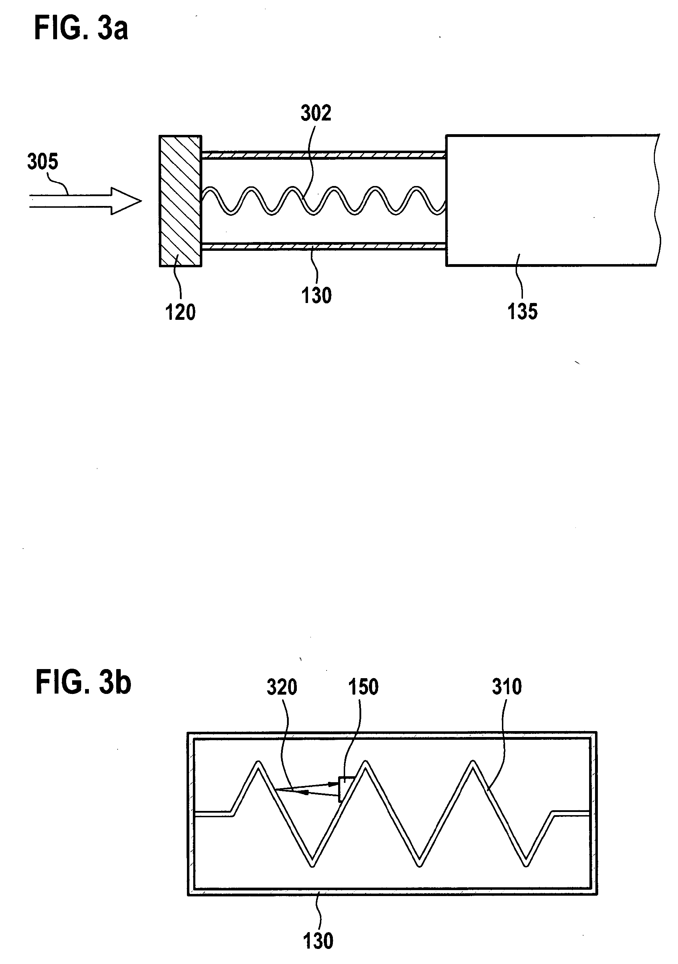

Ziel adaptiver Frontstruktur Systeme oder adaptiver Crashboxen ist es unter anderem auch während der Kollision und im Weiteren mit Hilfe im System integrierter vorausschauender Sensorik eine Anpassung, der vorderen Trägerstruktur durchzuführen. Ein Grundprinzip des Verbaus eines hier verwendbaren Messystems ist schematisch in Fig. 3a gezeigt. Dabei ist ein adaptives Deformationselement 130 zwischen dem Querträger 120 und einem Längsträger (beispielsweise dem Längsträger 135) eingesetzt. Das Deformationselement umfasst dabei ein Messsystem 302, das ansprechend auf eine Deformation, eine Geschwindigkeit oder eine Beschleunigung von Komponenten des Deformationselementes 130 ein entsprechendes Signal ausgibt. Das Messsystem 302 kann eine Faltstruktur im Inneren des Deformationselementes aufweisen, über die beispielsweise bei einem Auftreten eines Crashes aus der Richtung 305 eine Längenänderung des Deformationselementes 130 insgesamt erfasst wird. Ein Beispiel einer solchen vorausschauenden Sensorik mit einem solchen Messsystem ist für das Deformationselement 130 im Bereich der linken Frontseite des Fahrzeugs in Fig. 3b schematisch näher dargestellt. Das Deformationselement inkl. zugehörigem Sensor, der auf der rechten Fahrzeugseite verbaut ist, ist beispielsweise analog zu der Darstellung aus der Fig. 3b aufgebaut. Die Anpassung der Steifigkeit basiert nun auf einer Steuerung/Regelung eben dieses Tragsystems beziehungsweise dieser adaptiven Crashbox. Hierzu wird beispielsweise ein System vorgeschlagen, bei welchem gemäß der Darstellung aus Fig. 3b beispielsweise ein Radar-Element 150 oder alternativ auch ein Dehnungsmesselement als Abstandsänderungssensor in die Struktur des Deformationselementes integriert wird und somit den aktuellen Abstand bzw. die aktuelle Länge der relevanten Komponenten (beispielsweise einer Reflektionsfläche eines beim Aufprall deformierten Faltbleches 310) des Deformationselements 130 misst. Dabei wird ein Radarstrahl 320 von dem Sensor 150 in Fahrtrichtung des Fahrzeugs ausgestrahlt, der von einem Reflektorbereich des Faltbleches 320, reflektiert wird. Alternativ kann auch eine Abstandsänderung der einzelnen Flächen des Faltbleches 320 durch eine Widerstandsänderung erfolgen, wenn als Sensor 150 beispielsweise ein Dehnungsmessstreifen verwendet wird. Wird das Deformationselement durch den Aufprall des aus der Aufprallrichtung kommenden Objektes 170 deformiert, ändert sich der Abstand von zwei Komponenten des Deformationselements 130 und ein zur Abstandsänderung korrespondierendes Messsignal wird vom Sensor 150 ausgegeben. Bei der Wahl von adaptierbaren Deformationselementen kann, je nach Situation, das Deformationselement dann so eingestellt werden, so dass eine höhere oder geringere Steifigkeit zu verzeichnen ist. Auf diese Weise kann auch eine adaptive Deformationselementstruktur realisiert werden.

Die Auslösung von Personensicherheitsmitteln heutiger passiver Systeme basiert in der Regel auf Beschleunigungs- oder Körperschallsignale in einem zentralen Airbagsteuergerät. Zusätzlich werden auch periphere Sensoren sogenannte Upfront-Sensoren (UFS) eingesetzt, die eine frühzeitigere Crasherkennung ermöglichen sollen. Darüber hinaus existieren bereits einige Ansätze und Ideen auch die im Fußgängerschutzbereich eingesetzten Sensoren als zusätzliche Eingabesignale für eine Frontkollisionserkennung einzusetzen. Trotz des Einsatzes einer mittlerweile beträchtlichen Anzahl an Sensoren besteht immer noch die Herausforderung, einen Full-Frontal-Crash gegen eine starre Barriere (d.h. einen Aufprall eines Objektes, das über die gesamte Fahrzeugfrontbreite auf das Fahrzeug aufschlägt) von einem Versicherungstest AZT signaltechnisch zu separieren. Ein Aspekt der vorliegenden Erfindung besteht nun darin, dass die in einer adaptive Frontstruktur verbauten Sensoren, welche zur systemintrinsischen Deformationserkennung und/oder Abstandsmessung eingesetzt werden, neben ihrer eigentlichen Aufgabe zur Regelung der adaptiven Frontstrukturen auch zur Offset- und Crasherkennung verwendet werden können und als weiteres Eingabesignal für das zentrale Airbagsteuergerät vorgesehen werden. Im Weiteren kann mit Hilfe des hier vorgestellten Ansatzes mit Hilfe der bereits verbauten Sensoren eine "Low-Overlap" Detektion Erkennung durchgeführt werden, d.h. eine Erkennung, ob ein Objekt nur in einem kleinen seitlichen Teilbereich der Fahrzeugfront auf das Fahrzeug aufprallt. Da im Low-Overlap Fall, d.h. einer Frontalkollision mit Überdeckungen von beispielsweise weniger als 15 % der Fahrzeugfrontbreite links neben der linken Längsträgerstruktur 135 oder rechts neben der rechten Längsträgerstruktur 145 keine signifikanten Intrusionen in der Frontstruktur des Fahrzeugs auftreten und damit einhergehend kaum ein Geschwindigkeitsabbau stattfindet, spiegelt sich dieser Lastfall auch indirekt in den Signalen in Form fehlender Amplituden an nicht belasteten Sensoren wieder. Damit kann ein "Low-Overlap"-Fall von einem Standard-Offset-Fall eines Aufpralls eines Objektes mit 40 %-iger Überdeckung in Bezug auf die Fahrzeugfrontbreite und dem Fall einer Frontkollision mit 100 % Überdeckung in Bezug auf die Fahrzeugfrontbreite separiert werden.

Darüber hinaus besteht mit dem hier vorgeschlagenen Ansatz die Möglichkeit mit Hilfe dieser integrierten Sensoren 150 bzw. 155 eine Heckcrash-Plausibilisierung durchzuführen, da diese in der Regel bei einem Heckaufprall kein Signal innerhalb der auszulösenden 50 ms erhalten bzw. in einem solchen Fall keine innere Deformation der Deformationselemente 130 oder 140 messen werden. Zusätzlich zu den bereits genannten Möglichkeiten besteht zusätzlich die Möglichkeit dem zentralen Airbagsteuergerät eine Crashschwereinformation bereitzustellen. Diese lässt sich über die systeminterne Deformation und zugehörige Deformationsgeschwindigkeit und einen entsprechenden Mustervergleich ermitteln.

Zusammenfassend lässt sich sagen, dass der hier vorgestellte Ansatz einige Vorteile bietet, die mittels der obigen, systemintegrierten Sensorik ermöglicht werden:

Ersten kann eine Erkennung und Klassifizierung einer Offsetkollision gegenüber einer Frontalkollision mit 100 %-iger Überdeckung erreicht werden. Die Erkennung basiert auf dem Vergleich der Signale auf dem linken und rechten Kanal der Längsträgerstruktur (d.h. einem Signal, das von einem Deformationselementsensor des Deformationselements auf der linken vorderen Fahrzeugstruktur stammt gegenüber einem Signal, das von einem Deformationselementsensor des Deformationselements auf der rechten vorderen Fahrzeugstruktur stammt). Dabei wird beispielsweise eine mathematische oder logische Verknüpfung der beiden Signale durchgeführt und das Ergebnis der Verknüpfung ausgewertet. Zweitens kann eine Erkennung und Separation einer Low-Overlap-Kollision, die sich durch eine fehlende Intrusion des Längsträgers auszeichnet, gegenüber einer Kollision separiert werden, bei der die Längsträger intrudiert werden. Die Erkennung einer solchen Kollision basiert auf der fehlenden Intrusion der Längsträger bzw. der geringeren Signalamplitude und dem anders gearteten Verhalten der Signale im Vergleich zu einer Frontkollision mit Intrusion. Drittens kann eine Heckcrash-Plausibilisierung durch ein fehlendes Signal im Frontendbereich erfolgen, wodurch eine weitere Ausnutzung von Signalen von bereits verbauten Sensoren möglich wird. Viertens ermöglicht der hier vorgeschlagene Ansatz eine Bestimmung eines Crashschweremaßes anhand der System-Intrusion, d.h. anhand der Deformation der Struktur der Deformationselemente und der zugehörigen Deformationsgeschwindigkeit v der Struktur der Deformationselemente.

Ein erster Aspekt der Erfindung ist darin zu sehen, dass die primär für eine adaptive Struktur verwendeten systemintegrierten Sensoren zur Steuerung/Regelung der Aktorik auch als Sensoren des passiven Rückhaltesystems genutzt werden können, dahingehend dass unter anderem die vorstehend genannten Vorteile ermöglicht werden können. Darüber hinaus kann die Sensorik in Kombination mit anderen Sensoren wie beispielsweise dem zentralen Beschleunigungssensor als weitere Eingabegröße bei der Auslösung passiver Rückhaltesysteme verwendet werden.

Gemäß einem weiteren Aspekt der Erfindung zielt der Einsatz der bereits verbauten Sensorik vornehmlich auf die nachfolgenden Bereiche ab:

Zunächst kann eine Bereitstellung von Informationen erfolgen, beispielsweise werden Signale auf den CAN-Bus gelegt oder aber direkt in ein zentrales Steuergerät wie dem Airbagsteuergerät zur Verfügung gestellt. Weiterhin kann eine eigene im Steuergerät befindliche Auswertung der Information erfolgen, wobei nachfolgend das ausgewertete Signal anderen Steuergeräten wie einem Insassenschutzmittel-Steuergerät mittels eines Bussignals bereitgestellt werden kann. Drittens kann eine eigene im Steuergerät befindliche Auswertung der Information und eine eigene Ansteuerung von anderen Rückhaltemitteln wie beispielsweise dem Front- und/oder Seiten- und/oder Curtainairbag bei Low-Overlap-Crashfällen erfolgen, wodurch die Insassensicherheit deutlich erhöht werden kann. Viertens können auch bereits vorliegende periphere Sensorsignale, wie die Signale der vorstehend beschriebenen Deformationselementsensoren, als Eingabesignale für ein Steuergerät zum Ansteuern aktiver- und/oder passiver Rückhaltekomponenten verwendet werden.

Besonders vorteilhaft ist der hier vorgeschlagene Ansatz, da dadurch mehrere Vorteile zugleich realisiert werden können. Zunächst kann eine Kostenreduktion durch Einsparung von Upfront- bzw. peripheren Sensoren zur Offset-Detektion erreicht werden. Dadurch bedingt lässt sich eine weitere Kostenreduktion durch Einsparung der Integration der Beschleunigungssignale im Steuergerät und somit Einsparung entsprechender Software und Ressourcen erreichen. Zusätzlich kann eine Steigerung der Erkennungsrobustheit des Airbagauslöse-Algorithmus durch zuverlässige Aussagen über die Intrusionstiefe, Intrusionsgeschwindigkeit und entsprechende Reduktion der Empfindlichkeit erreicht werden. Zugleich lässt sich eine zuverlässige Detektion einer "Low-Overlap"-Kollision umsetzen und es besteht weiterhin ein Einsparpotential eines ,,-x"-Sensors zur Heckcrash-Plausibiliserung dadurch Mehrfachnutzen der Sensorik der bereits verbauten adaptiven Struktur im Fahrzeug-Frontbereich. Ferner ist es auch möglich, eine Zusatzinformation zur Crashtyp- und Crashschwereklassifizierung und damit verbesserte Auslöseperformance zu erhalten und eine eindeutigere Klassifizierung von "Low-Overlap"-Kollisionen im Vergleich zur Klassifikation auf Basis von Beschleunigungssignalen zu ermöglichen. Zusätzlich kann ein deutlicher Sicherheitsgewinn für den Insassen durch adaptive und zeitabgestimmte Ansteuerungsmöglichkeiten von passiven Sicherheitssystemen bei "Low-Overlap"-, Offset und Full-Frontal-Lastfällen erreicht werden. Der hier vorgeschlagene Ansatz kann daher als Grundprinzip angesehen werden, da die bereits im Fahrzeug vorhandenen Sensoren zukünftig einen Mehrnutzen für die passiven Sicherheitssysteme darstellen.

Die Erfindung sieht vor, dass eine Auswertung der Sensorsignale in einem separaten oder einen bereits existierende Steuergerät; beispielsweise dem Airbagsteuergerät, erfolgt. Im Falle einer Auswertung in einem zentralen Auslösesteuergerät wird die Information entweder als Rohsignal und/oder in aufbereiteter und/oder vorverarbeiteter Information auf ein Bus-System übermittelt. Im Falle einer Auswertung in einem eigenen Steuergerät kann die Information auch anderen Steuergeräten mittels einer Bus-Kommunikation zur Verfügung gestellt werden. Ebenfalls ist es denkbar diese Information mit anderen Signalen z.B. aus dem Fahrdynamikregelsystem und/oder einem Beschleunigungssensor derart zu kombinieren, dass weitere Steuer- und/oder Regelsignale gewonnen werden können, so dass eine Ansteuerung von beispielsweise reversiblen und/oder irreversiblen Systemen erfolgen kann. Ebenfalls ist es denkbar die Signale in einem eigens dafür vorgesehenen Rekorder aufzuzeichnen, so dass nach einer Kollision diese Information wiederum abrufbar wird. Darüber hinaus ist es auch denkbar die Information für eine Einstellung oder Kalibrierung eines Algorithmus in einer Datenbank zu sammeln und abzurufen, so dass eine geeignete Einstellung des Steuergerätes erfolgt.

In einer ersten günstigen Ausführung der Erfindung werden ein Signal aus dem linken Aktuator und ein Signal aus dem rechten Aktuator miteinander verknüpft, so dass eine Abfrage über einen Schwellwert eine Aussage über eine Offsetkollision gibt. Es ist klar, dass eine Verknüpfung der Information durch Subtraktion/Addition/Multiplikation oder anderen mathematischen Funktionen ebenfalls möglich ist.

In der hier dargestellten beispielhaft aufgeführten Umsetzung wird eine Subtraktion des rechten vom linken Kanal durchgeführt.

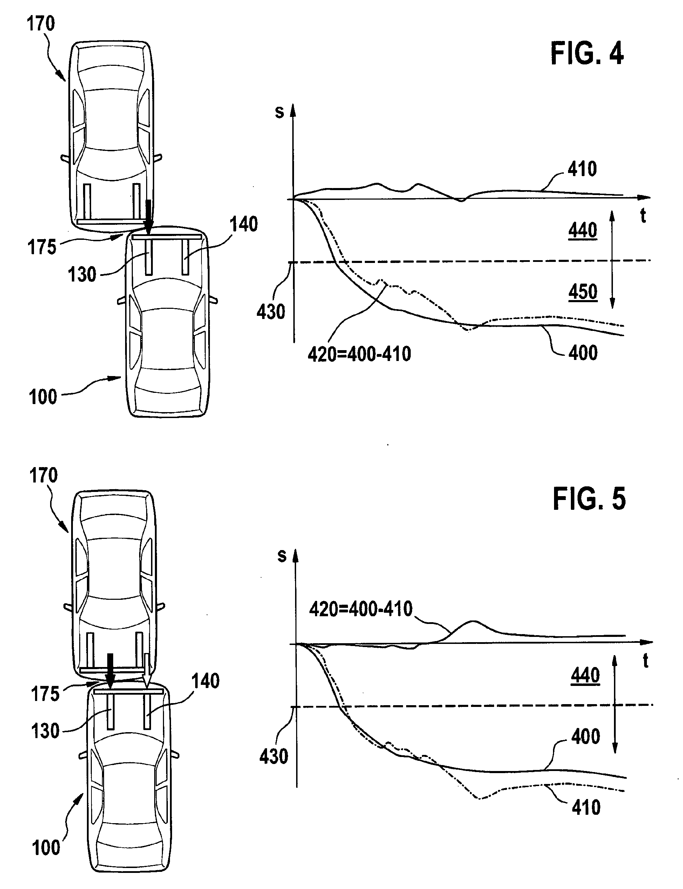

In der Fig. 4 ist eine Offsetkollision zwischen zwei Fahrzeugen dargestellt. Dabei ist das in der Fig. 4 unten dargestellte Zielfahrzeug 100 mit einer adaptiven Frontstruktur ausgestattet, wie sie vorstehend beschrieben wurde. Die Messung des Signals erfolgt beispielsweise, wie oben bereits angegeben, über einen Radar-Sensor. Dieser ist im System verbaut und misst den Weg der Struktur das jeweiligen Deformationselement, an dem der Radarsensor angeordnet ist.

Dabei wird eine linke Struktur des Fahrzeugs 100 getroffen und intrudiert, wohingegen die rechte Struktur des Fahrzeugs nicht oder nur bedingt intrudiert. Im Falle einer Kollision kommt es so zu einer Intrusion an der linken adaptiven Crashstruktur. Diese verformt sich und damit verkürzt sich deren Länge. Der Sensor misst eben diesen Weg. Beispielhaft wird der Weg kleiner, was für das entsprechende Signal dieses Sensors 150 für das linke Deformationselement im Zeit(t)-Intrusions(s)-Diagramm in Fig. 4 mit dem Bezugszeichen 400 und einem negativen Vorzeichen gekennzeichnet ist. Im Gegensatz dazu bleibt das Signal aus dem Sensor des rechten Deformationselements 140 (im Diagramm aus Fig. 4 mit dem Bezugszeichen 410 bezeichnet) nahezu konstant. Vermutlich wird aufgrund der Deformation eine geringere Änderung der Struktur erwartet. Bildet man nun die Differenz 420 von Werten der beiden Signale 400 und 410, dann ergibt sich als Resultat das mit dem Bezugszeichen 420 gekennzeichnete Signal. Mittels eines Schwellwertes 430 kann nun in einer ersten vorzugsweisen beispielhaften Ausführung eine Trennung der Erkennung zwischen einer Offset- und Full-Frontal-Kollision stattfinden. Dabei wird eine (Full-) Frontal-Kollision 440 angenommen, wenn der Differenzsignalwert in einem Bereich zwischen einem Wert von Null und dem Schwellwert 430 liegt wogegen eine Offset-Kollision 450 erkannt werden kann, wenn der Differenzsignalwert 420 in einem Bereich kleiner als der Schwellwert 430 liegt. Sollte eine Vertauschung der Signale 410 und 420 für die Differenzbildung erfolgen, so müsste eine Auswertung derart erfolgen, dass die Offset-Kollision dann erkannt wird, wenn das Differenzsignal größer als ein Schwellwert ist. Somit kann allgemein gesagt werden, dass eine OffsetKollision dann erkannt wird, wenn ein absoluter Wert des Differenzsignals größer als ein Schwellwert ist. Es können jedoch auch unterschiedliche Überlappungsgrade mit dem hier vorgestellten Ansatz erkannt werden. Hierzu müsste dann lediglich eine Auswertung mit unterschiedlichen Schwellwerten erfolgen, wobei in diesem Fall jeder Schwellwert einen eigenen Überlappungsgrad repräsentiert.

Eine Full-Frontal- Kollision (d.h. eine 100% überdeckte Kollision) ist beispielhaft in Fig. 5 dargestellt. Dabei werden eine linke und eine rechte Deformationselement-Struktur des Fahrzeugs getroffen und intrudieren. Es treffen sich also beide Fahrzeuge 100 und 170 nahezu mit 100%-iger Überdeckung. Dabei werden beide Frontstrukturen 130 und 140 deformiert. Diese Deformation kann in der linken bzw. rechten adaptiven Struktur 130 bzw. 140 zwar unterschiedlich stark ausgeprägt sein, jedoch bleibt das Differenzsignal 420 (insbesondere absolut gesehen) unterhalb des Schwellwerts 430.

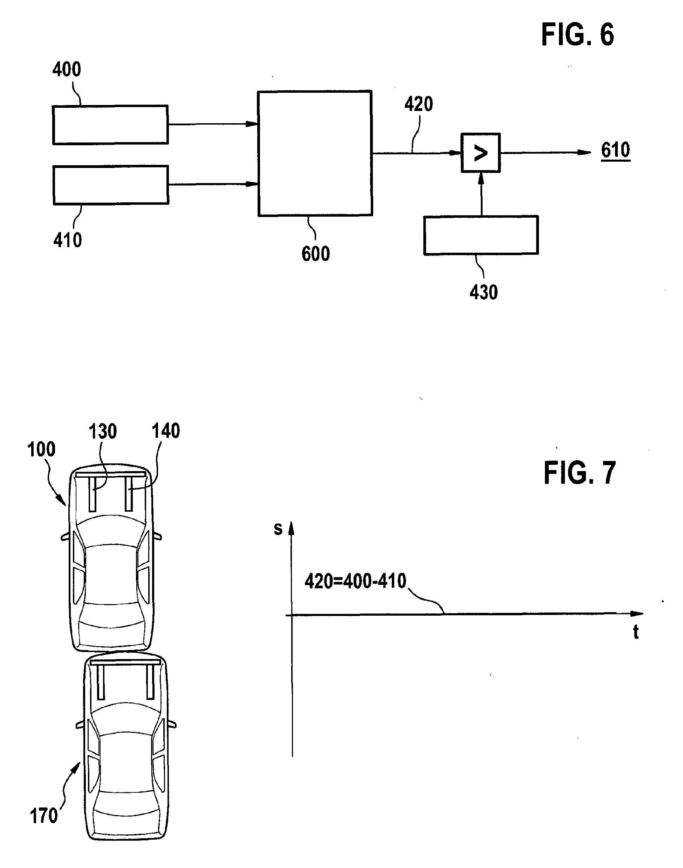

Ein erster einfacher Algorithmus zur Offset-Detektion mit Hilfe einer einfachen Schwellwertabfrage ist in dem Blockschaltbild aus Fig. 6 dargestellt. Dabei werden ein Signal 400 von dem Sensor 150 des linken Deformationselements 130 (auch als linker Kanal bezeichnet) und ein Signal 410 von dem Sensor 155 des rechten Deformationselements 140 der adaptiven Deformationselement-Struktur einem Funktionsblock 600 zur Verfügung gestellt. Wie bereits oben angedeutet, kann die Funktion jede mathematische Operation darstellen, für das hier beschriebene Ausführungsbeispiel wird dabei eine Differenzbildung 420 verwendet. Ebenfalls denkbar auch eine Verhältnisbildung. Das Ergebnis wird gegenüber einem Schwellwert 430 verglichen, der als Parameter ausgebildet ist und aus einem Speicher zur Verfügung gestellt werden kann. Andere aufwändigere Funktionen wie beispielsweise eine Speicherung und/oder Filterung sowie Summation der über den Schwellwert 430 befindlichen logischen Zustände und dem anschließenden Abfragen gegenüber weiteren Schwellwerten sind ebenfalls denkbar. Das Resultat in diesem Beispiel ist die Erkennung einer Offset-Kollision 610 bei einem Überschreiten eines Wertes des Differenzsignals 420 über einen Schwellwert 430.

Bei einer Heckkollision, welche schematisch in Fig. 7 dargestellt ist, ergeben sich keine Intrusionen bzw. Deformationen der im Frontbereich eingebauten adaptiven Strukturen 130 oder 140. Bei einer Heckkollision werden dabei die linken und rechten Strukturen nicht intrudiert, daher wird auch keine Signaländerung erfasst, die Abstandsänderungen von Komponenten dieser Deformationselemente repräsentiert. Auf diese Weise kann durch die beschriebene Deformationselementstruktur 130, 140 für eine Plausibilisierung einer Heckkollision auf das betrachtete Fahrzeug 100 verwendet werden. Diese Information kann in Zusammenhang mit einem zentralen Beschleunigungssignal aₓ ausgewertet werden. Das zentrale Beschleunigungssignal aₓ zeigt beispielsweise eine positive Beschleunigung, daraus abgeleitete Größen kennzeichnen damit eine Heckkollision. Im Vergleich hierzu ergeben sich keine Intrusionen und Signale aus den Frontstrukturen 130 und 140. Damit lässt sich eine Plausibilisierung für eine Heckkollision aufbauen, welche die entsprechend geeigneten Rückhaltemittel für eine Heckkollision ansteuert.

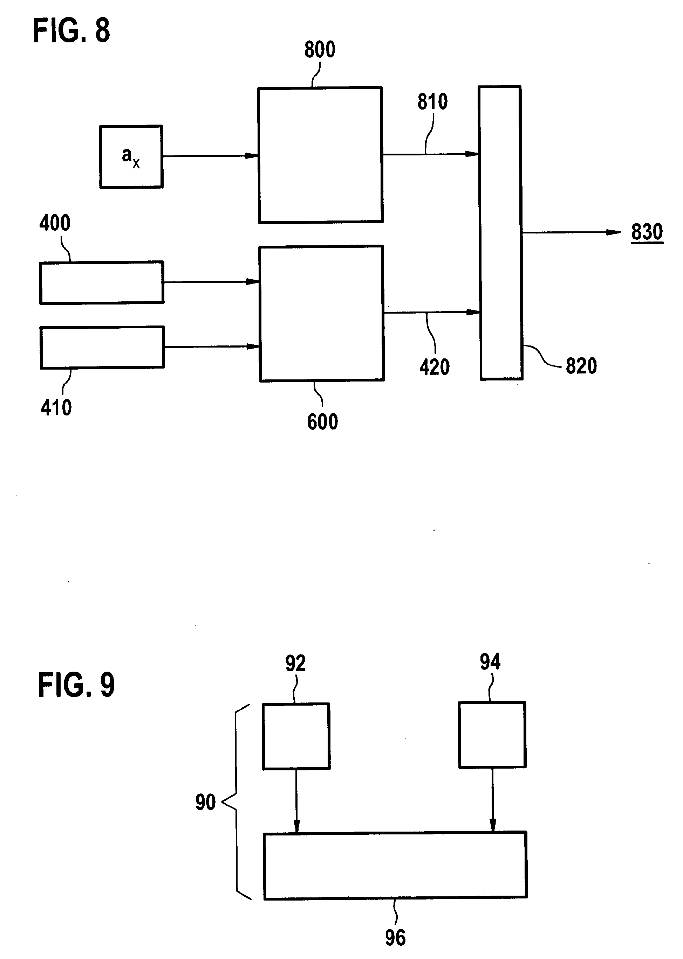

Ein erster einfacher Algorithmus zur Erkennung einer solchen Heckkollision ist als Blockschaltbild-Darstellung in Fig. 8 dargestellt. Dabei wird ein Beschleunigungssignal aₓ von beispielsweise einem zentralen Beschleunigungssensor in einem Heckcrash-Algorithmus 800 verarbeitet, wobei als Ausgabe ein Auslösesignal 810 folgt. Parallel dazu werden die beiden Kanäle 400 und 410 der adaptiven Strukturen 130 und 140 in einem weiteren Schritt, beispielsweise unter Verwendung einer Differenzbildung in einem Funktionsblock 600 verarbeitet. Andere Funktionen sind ebenfalls denkbar. Das resultierende Signal 420 wird mit dem Signal 810 aus dem Heckcrashalgorithmus 800 in einem Plausibilisierungsblock 820 zusammengeführt. Die Plausibilisierung kann dabei eine einfache, boolesche Operation z.B. eine UND-Verknüpfung sein, oder andere aufwändigere Funktionen darstellen. Im Anschluss daran erfolgt eine Aktivierung 830 von Rückhaltemitteln für Heckkollisionen, z.B. eine aktive Kopfstütze bzw. sitzintegrierte Systeme.

Analog zur Offseterkennung kann eine Detektion einer "Low-Overlap"-Kollision erfolgen. Dabei ist zu erwarten dass die Differenzsignale entsprechend geringer ausfallen.

Die Crashschweredetektion kann im Weiteren über eine Zusatzauswertung hinsichtlich der Intrusionsamplitude des Systems und der zugehörigen Deformationsgeschwindigkeit erfolgen. Dabei wird über eine Kennlinie geprüft wie schnell und wie stark die Intrusion erfolgt. Entsprechend lassen sich über die Kennlinien Crashschwerekategorien zuordnen, die im weiteren Verlauf vom Algorithmus verwendet werden, um eine Auslöseentscheidung der Rückhaltekomponenten vorzunehmen.

In einem weiteren Schritt kann über die reine Trennung in die Fälle
A) Full-Frontal
B) 40 % Offset
C) Low-Overlap
hinaus, auch eine Abschätzung des Maßes der Überdeckung durchgeführt werden. Die Basis einer derartigen Abschätzung liegt in der Messung der Kompatibilität der entsprechenden Tragstrukturen der beiden Fahrzeuge. Je nachdem ob diese sich im Fall A) Full-Frontal deckungsgleich (2X2 Tragstrukturen) treffen oder im Fall B) 40% Offset (1x1 Tragstrukturen) bildet sich die Tragkette und damit die von den jeweiligen Tragstrukturen "abgestützte" Masse in den Beschleunigungssignalen ab. Im Fall C) treffen sich die Tragstrukturen kaum mehr, entsprechend sichtbar wird dies zusätzlich über die Deformations- bzw. Deformationsgeschwindigkeitsmessung der strukturintegrierten Messsensorik. Die grundsätzliche Charakteristik der Deformations- bzw. Deformationsgeschwindigkeitsmessung des integrierten adaptiven Systems in Kombination mit der Messung aus der zentralen Beschleunigungssensorik kann in einer verallgemeinerten Form der vorgestellten Erfindung zur Bestimmung des Offsetgrades herangezogen werden.

Andere Funktionen sind entsprechend realisiert. Darüber hinaus besteht natürlich die Möglichkeit diese Signale mit anderen Signalen z.B. aus einem Fahrdynamikregelsystem zu kombinieren, um daraus abgeleitet eine neue Funktion abzubilden, die im Bereich der passiven Sicherheit liegt. Beispielsweise ist denkbar, dass je nach Rotation des Fahrzeugs und entsprechender Intrusion (links oder rechts) reversible Komponenten im Fahrzeug z.B. Sitzkomponenten angesteuert werden.

Fig. 9 zeigt ein Ablaufdiagramm eines Ausführungsbeispiels der vorliegenden Erfindung als Verfahren 90 zur Erkennung einer Breite eines Aufprallbereiches eines Objektes im Frontbereich eines Fahrzeugs. Das Verfahren umfasst einen Schritt des Empfangens 92 eines ersten Deformationselementsignals, das eine Veränderung eines Abstands von Komponenten eines im linken Frontbereich des Fahrzeugs verbauten ersten Deformationselements zueinander repräsentiert. Weiterhin umfasst das Verfahren einen Schritt des Erhaltens 94 eines zweiten Deformationselementsignals, das eine Veränderung eines Abstands von Komponenten eines im rechten Frontbereich des Fahrzeugs verbauten zweiten Deformationselements zueinander repräsentiert. Schließlich weist das Verfahren einen Schritt des Erkennens 96 einer Offset-Kollision mit einer geringen Breite eines Aufprallbereiches des Objektes auf das Fahrzeug auf, wenn sich das erste Deformationselementsignal um mehr als einen vordefinierten Schwellwertpegel von dem zweiten Deformationselementsignal unterscheidet.

## Patentansprüche

1. Verfahren (90) zur Erkennung einer Breite eines Aufprallbereiches (175) eines Objektes (170) im Frontbereich (110) eines Fahrzeugs (100), wobei das Verfahren (90) die folgenden Schritte aufweist:
- Empfangen (92) eines ersten Deformationselementsignals (400), das eine Veränderung eines Abstands von Komponenten eines im linken Frontbereich des Fahrzeugs (100) verbauten ersten Deformationselements (130) zueinander repräsentiert;
- Erhalten (94) eines zweiten Deformationselementsignals (410), das eine Veränderung eines Abstands von Komponenten eines im rechten Frontbereich des Fahrzeugs verbauten zweiten Deformationselements (140) zueinander repräsentiert;
- Erkennen (96) einer Offset-Kollision mit einer geringen Breite eines Aufprallbereiches (175) des Objektes (170) auf das Fahrzeug (100), wenn sich das erste Deformationselementsignal (400) um mehr als einen vordefinierten Schwellwertpegel (430) von dem zweiten Deformationselementsignal (410) unterscheidet.

2. Verfahren (90) gemäß Anspruch 1, **dadurch gekennzeichnet, dass** ferner der Schritt des Erkennens ein Verknüpfen des ersten Deformationselementsignals (400) mit dem zweiten Deformationselementsignal (410) umfasst, um ein Verknüpfungssignal (420) zu erhalten wobei im Schritt des Erkennens (96) ferner die Offset-Kollision mit der geringen Breite des Aufprallbereiches (175) dann erkannt wird, wenn ein absoluter Signalpegelwert des Verknüpfungssignals (420) einen Wert aufweist, der über einem vorbestimmten Schwellwert (430) liegt.

3. Verfahren (90) gemäß Anspruch 2, **dadurch gekennzeichnet, dass** im Schritt des Erkennens eine Bildung einer Differenz, einer Addition, einer Multiplikation und/oder einer Division zwischen Werten des ersten (400) und zweiten (410) Deformationselementsignals ausgeführt wird.

4. Verfahren (90) gemäß einem der vorangegangenen Ansprüche, **dadurch gekennzeichnet, dass** im Schritt des Erkennens (96) eine mittlere Breite eines Aufprallbereiches (175) des Objektes (170) auf das Fahrzeug erkannt wird, wenn sich das erste Deformationselementsignal (400) um mehr als einen vordefinierten zweiten Schwellwertpegel aber weniger als dem Schwellwertpegel von dem zweiten Deformationselementsignal (410) unterscheidet oder wenn ein absoluter Wert des Verknüpfungssignals (420) einen Wert aufweist, der unter dem vorbestimmten Schwellwert (430) jedoch über einem vorbestimmten zweiten Schwellenwert liegt.

5. Verfahren (90) gemäß einem der vorangegangenen Ansprüche, **dadurch gekennzeichnet, dass** im Schritt des Erkennens (96) eine große Breite eines Aufprallbereiches (175) des Objektes (170) auf das Fahrzeug (100) erkannt wird, wenn das Verknüpfungssignal (420) einen Signalpegelwert aufweist, der innerhalb eines Toleranzbereiches um einen Wert von Null liegt oder wenn sich ein Wert des ersten Deformationselementsignals (410) innerhalb eines Toleranzbereiches nicht von dem zweiten Deformationselementsignal (410) unterscheidet.

6. Verfahren (90) gemäß einem der vorangegangenen Ansprüche, **dadurch gekennzeichnet, dass** im Schritt des Erkennens (96) ferner ein Heckaufprall eines Objektes (170) auf das Fahrzeug (100) erkannt wird, wenn ein weiteres Signal, das eine positive Beschleunigung (aₓ) in eine Fahrtrichtung (115) des Fahrzeugs (100) repräsentiert, zusammen mit einem Verknüpfungssignal (420) erhalten wird, dessen Signalpegelwert innerhalb eines Toleranzbereiches einen Wert von Null liegt.

7. Verfahren (90) gemäß einem der vorangegangenen Ansprüche, **dadurch gekennzeichnet, dass** das Verfahren ferner, ansprechend auf ein ausgewertetes Verknüpfungssignal (610), einen Schritt des Ausgebens eines Ansteuersignals für eine Fahrzeuginsassenschutzeinheit (185, 190) des Fahrzeugs (100) umfasst.

8. Verfahren (90) gemäß einem der vorangegangenen Ansprüche, **dadurch gekennzeichnet, dass** im Schritt des Erkennens (96) ferner ein vorbestimmter Schweregrad eines Aufpralls des Objektes (170) auf das Fahrzeug (100) erkannt wird, wenn sich eine Signalamplitude des ersten (400) und/oder zweiten (410) Deformationselementsignals innerhalb einer vordefinierten Auswertungszeit um mehr als eine vorbestimmte Amplitudendifferenz ändert.

9. Verfahren (90) gemäß einem der vorangegangenen Ansprüche, **dadurch gekennzeichnet, dass** im Schritt des Erkennens (96) ferner ansprechend auf eine Signalamplitude des ersten (400) und/oder zweiten (410) Deformationselementsignals eine Eindringtiefe des Objektes (170) in das Fahrzeug (100) erkannt wird.

10. Steuergerät (160), das ausgebildet ist, um die Schritte eines Verfahrens (90) gemäß einem der Ansprüche 1 bis 9 durchzuführen.

11. Computerprogrammprodukt mit Programmcode, der auf einem maschinenlesbaren Träger gespeichert ist, zur Durchführung des Verfahrens (90) nach einem der Ansprüche 1 bis 9, wenn das Programm auf einem Steuergerät (160) ausgeführt wird.

## Claims

1. Method (90) for detecting the width of an impact area (175) of an object (170) in the front area (110) of a vehicle (100), wherein the method (90) comprises the following steps:
- receiving (92) a first deformation element signal (400) which represents a change in a distance between components of a first deformation element (130) which is installed in the left-hand front area of the vehicle (100);
- obtaining (94) a second deformation element signal (410) which represents a change in a distance between components of a second deformation element (140) which is installed in the right-hand front area of the vehicle;
- detecting (96) an offset collision with a short width of an impact area (175) of the object (170) against the vehicle (100) if the first deformation element signal (400) differs from the second deformation element signal (410) by more than a predefined threshold value level (430).

2. Method (90) according to Claim 1, **characterized in that**, in addition, the detection step comprises logically combining the first deformation element signal (400) with the second deformation element signal (410) in order to obtain a logic combination signal (420), wherein in the detection step (96), in addition, the offset collision with the short width of the impact area (175) is then detected if an absolute signal value level of the logic combination signal (420) has a value which is above a predetermined threshold value (430).

3. Method (90) according to Claim 2, **characterized in that** in the detection step a difference is formed between values of the first deformation element signal (400) and second deformation element signal (410) or said values are added, multiplied and/or divided.

4. Method (90) according to one of the preceding claims, **characterized in that** in the detection step (96) an average width of an impact area (175) of the object (170) against the vehicle is detected if the first deformation element signal (400) differs from the second deformation element signal (410) by more than a predefined second threshold value level but less than the threshold value level or if an absolute value of the logic combination signal (420) has a value which is below the predetermined threshold value (430) but above a predetermined second threshold value.

5. Method (90) according to one of the preceding claims, **characterized in that** in the detection step (96) a large width of an impact area (175) of the object (170) against the vehicle (100) is detected if the logic combination signal (420) has a signal level value which lies within a tolerance range about a value of zero or if a value of the first deformation element signal (400) does not differ from the second deformation element signal (410), within a tolerance range.

6. Method (90) according to one of the preceding claims, **characterized in that** in the detection step (96), in addition, a tail-end impact of an object (170) against the vehicle (100) is detected if a further signal, which represents a positive acceleration (aₓ) in a direction of travel (115) of the vehicle (100), whose signal level value lies within a tolerance range about a value of zero, is obtained together with a logic combination signal (420).

7. Method (90) according to one of the preceding claims, **characterized in that** the method additionally comprises, in response to an evaluated logic combination signal (610), a step of outputting an actuation signal for a vehicle occupant protection unit (185, 190) of the vehicle (100).

8. Method (90) according to one of the preceding claims, **characterized in that** in the detection step (96), in addition, a predetermined degree of severity of an impact of the object (170) against the vehicle (100) is detected if a signal amplitude of the first deformation element signal (400) and/or second deformation element signal (410) changes by more than a predetermined amplitude difference within a predefined evaluation time.

9. Method (90) according to one of the preceding claims, **characterized in that** in the detection step (96), in addition, the penetration depth of the object (170) into the vehicle (100) is detected in response to a signal amplitude of the first deformation element signal (400) and/or second deformation element signal (410).

10. Control device (160) which is designed to carry out the steps of a method (90) according to one of Claims 1 to 9.

11. Computer program product having program code which is stored on a machine-readable carrier, for carrying out the method (90) according to one of Claims 1 to 9 when the program is executed on a control device (160).

## Revendications

1. Procédé (90) de détection d'une largeur d'une zone de collision (175) d'un objet (170) dans la zone avant (110) d'un véhicule (100), le procédé (90) présentant les étapes suivantes :
- réception (92) d'un premier signal d'élément de déformation (400) qui représente une modification d'un écart mutuel entre les composants d'un premier élément de déformation (130) monté dans la zone avant gauche du véhicule (100) ;
- obtention (94) d'un deuxième signal d'élément de déformation (410) qui représente une modification d'un écart mutuel entre les composants d'un deuxième élément de déformation (140) monté dans la zone avant droite du véhicule ;
- détection (96) d'une collision de décalage avec une faible largeur d'une zone de collision (175) de l'objet (170) sur le véhicule (100) lorsque le premier signal d'élément de déformation (400) présente une différence supérieure à un niveau de valeur de seuil prédéfini (430) du deuxième signal d'élément de déformation (410).

2. Procédé (90) selon la revendication 1, **caractérisé en ce que** l'étape de détection comprend en plus une combinaison du premier signal d'élément de déformation (400) avec le deuxième signal d'élément de déformation (410) afin d'obtenir un signal combiné (420), la collision de décalage avec la faible largeur de la zone de collision (175) dans l'étape de détection (96) étant en outre détectée lorsqu'une valeur de niveau de signal absolue du signal combiné (420) présente une valeur qui est supérieure à une valeur de seuil prédéfinie (430).

3. Procédé (90) selon la revendication 2, **caractérisé en ce que** dans l'étape de détection est réalisé un calcul d'une différence, d'une addition, d'une multiplication et/ou d'une division entre les valeurs du premier (400) et du deuxième signal d'élément de déformation (410).

4. Procédé (90) selon l'une des revendications précédentes, **caractérisé en ce que** dans l'étape de détection (96), une largeur moyenne d'une zone de collision (175) de l'objet (170) sur le véhicule est détectée lorsque le premier signal d'élément de déformation (400) présente par rapport au deuxième signal d'élément de déformation (410) une différence supérieure à un deuxième niveau de valeur de seuil prédéfini, mais inférieure au niveau de valeur de seuil, ou lorsqu'une valeur absolue du signal combiné (420) présente une valeur qui est inférieure à la valeur de seuil prédéfinie (430), mais supérieure à une deuxième valeur de seuil prédéfinie.

5. Procédé (90) selon l'une des revendications précédentes, **caractérisé en ce que** dans l'étape de détection (96), une grande largeur d'une zone de collision (175) de l'objet (170) sur le véhicule (100) est détectée lorsque le signal combiné (420) présente une valeur de niveau de signal qui se trouve dans une plage de tolérances autour d'une valeur égale à zéro ou lorsqu'une valeur du premier signal d'élément de déformation (400) ne présente pas de différence par rapport au deuxième signal d'élément de déformation (410) dans une plage de tolérances.

6. Procédé (90) selon l'une des revendications précédentes, **caractérisé en ce que** dans l'étape de détection (96), une collision arrière d'un objet (170) sur le véhicule (100) est en outre détectée lorsqu'un signal supplémentaire, qui représente une accélération positive (aₓ) dans un sens de déplacement (115) du véhicule (100), est obtenu conjointement avec un signal combiné (420) et dont la valeur de niveau de signal se trouve dans une plage de tolérances autour d'une valeur égale à zéro.

7. Procédé (90) selon l'une des revendications précédentes, **caractérisé en ce que** le procédé comprend en plus, en réaction à un signal combiné interprété (610), une étape de délivrance d'un signal de commande pour une unité de protection de passagers de véhicule (185, 190) du véhicule (100).

8. Procédé (90) selon l'une des revendications précédentes, **caractérisé en ce que** dans l'étape de détection (96), un degré de gravité prédéfini d'une collision de l'objet (170) sur le véhicule (100) est en outre détecté lorsqu'une amplitude de signal du premier (400) et/ou du deuxième (410) signal d'élément de déformation varie de plus d'une différence d'amplitude prédéfinie pendant une période d'interprétation prédéfinie.

9. Procédé (90) selon l'une des revendications précédentes, **caractérisé en ce que** dans l'étape de détection (96), une profondeur de pénétration de l'objet (170) dans le véhicule (100) est en plus détectée en réaction à une amplitude de signal du premier (400) et/ou du deuxième (410) signal d'élément de déformation.

10. Contrôleur (160) qui est conçu pour exécuter les étapes d'un procédé (90) selon l'une des revendications 1 à 9.

11. Programme informatique avec code de programme qui est enregistré sur un support lisible par machine pour mettre en oeuvre le procédé (90) selon l'une des revendications 1 à 9 lorsque le programme est exécuté sur un contrôleur (160).
